# EUROPEAN PATENT APPLICATION

(11) **EP 1 947 869 A1**
(43) Date of publication of application: **23.07.2008**
(21) Application number: 07100775.1
(22) Date of filing: 18.01.2007
(51) Int. Cl.: H04Q 7/22

(54) **System and method for establishing reliable data connectivity with a network node by a user equipment (UE) device**

(71) Applicant: Research In Motion Limited, Waterloo, Ontario N2L 3W8 (CA)
(72) Inventor: George, Richard, Waterloo N2T 2S3 (CA); Oliver, Brian, Fergus, Ontario N1M 1C8 (CA); Bakker, Jan John-Luc, Flemington, NJ 08822 (US); Buckley, Adrian, Tracy, CA 95376 (US)
(74) Representative: Fennell, Gareth Charles

(57) **Abstract**

In one embodiment, a scheme is disclosed for effectuating remote control of a network node (408) by a user equipment (UE) device (102A). A message relating to a service feature is constructed and wrapped in a wrapper, which is then transmitted to the network node (408) via an out-of-band control channel over a network infrastructure including a dedicated network portion (405) and a trusted network portion (407) for invoking the requested service feature. In an exemplary implementation, the wrapper is comprised of a Short Message Service (SMS)-based message, an Unstructured Supplementary Service Data (USSD)-based message, and a User-to-User Signaling (UUS)-based message.

## Description

### CROSS-REFERECE TO RELATED APPLICATION(S)

This application discloses subject matter that is related to the subject matter of the following U.S. patent application(s): (i) "SYSTEM AND METHOD FOR EFFECTUATING REMOTE CONTROL OF A NETWORK NODE BY A USER EQUIPMENT (UE) DEVICE" (Docket No. 30745-US-PAT), Application No.: , filed , in the name(s) of Richard George, Brian Oliver, Jan John-Luc Bakker and Adrian Buckley, which is (are) hereby incorporated by reference.

### FIELD OF THE DISCLOSURE

The present patent disclosure generally relates to communications networks. More particularly, and not by way of any limitation, the present patent disclosure is directed to a system and method for establishing reliable data connectivity with a network node by a user equipment (UE) device while the network node is rendered in a non-digitally addressable condition.

### BACKGROUND

Cellular telephony networks such as the Global System for Mobile Communications (GSM) network are designed to support various mobile user equipment (UE) devices having different capabilities. For instance, some UE devices have the capability to engage in voice calls only. On the other hand, there may be devices having voice and data capabilities but not concurrently, as well as devices that can support simultaneous voice and data connections. However, due to certain inherent design considerations, UE devices that have non-concurrent voice and data capabilities are generally more prevalent than the devices with simultaneous voice and data capability. This situation gives rise to a drawback in that while in a voice call over a circuit-switched connection, the device is unable to send data.

To address such behavior, current 3^{rd} Generation Partnership Project (3GPP) standards provide a solution that emulates pseudo-simultaneous voice and data capability with respect to the UE devices. Nevertheless, this solution has not been widely implemented since it requires expensive additional software and hardware in the UE device as well as the network infrastructure. As a consequence, for a system that wishes to offer enterprise-related data connectivity (e.g., in order to effectuate call control) to a UE device that is engaged in a voice call, the system enterprise server is no longer a digitally addressable network node, and thus conventional choice has been the use of Dual Tone Multi-Frequency (DTMF) signaling, which uses command signals in either in-band (audible to the user) or out-of-band (inaudible to the user) mode. Even this approach is not without attendant shortcomings, however. For example, the DTMF signaling is usually reliable only one way and requires the enterprise server to have expensive audio processing hardware and software in order to receive and process the tones. Further, as multiple systems also use the same tones, it is possible that a wrong system may process the received tones that are targeted to a different system. Yet another conventional option involving the implementation of alternative speech/data such as used for Telecommunications Device for the Deaf (TDD) technology has also been found to be deficient.

### SUMMARY

The present patent disclosure is broadly directed to a scheme for effectuating reliable data connectivity with a network node that has been rendered non-digitally addressable for some reason. In one example, the non-digitally addressable network node may comprise an enterprise server operable to host a variety of applications or services. Preferably, the data connectivity can be established by a UE device while engaged in a circuit-switched call or otherwise unavailable for establishing a packet-switched connection. A message relating to an enterprise service feature is constructed and wrapped in a wrapper, which is then transmitted to the enterprise server via an out-of-band control channel over a network infrastructure including a dedicated network portion and a trusted network portion for invoking the requested service feature. In an exemplary implementation, the wrapper may be comprised of, but not limited to, a Short Message Service (SMS)-based message, an Unstructured Supplementary Service Data (USSD)-based message, and a User-to-User Signaling (UUS)-based message, and the like. Further, certain network elements in the dedicated network and trusted network portions may be co-located with respect to effectuating a reliable data connectivity path for receiving the message-based wrapper request from the UE device and processing it for upward transmission to the network node.

In one aspect, disclosed herein is an embodiment of a method for establishing reliable data connectivity with a network node in operation with a UE device. The UE device can communicate with the network node in at least one of a first connection and a second connection, the first and second connections being effectuable over two different networks. The claimed embodiment comprises one or more of the following: determining that the network node is not accessible via a first network using the first connection; constructing a message (e.g., relating to an application service feature) that is to be executed at the network node; and wrapping the message in a wrapper belonging to a second network and directing the wrapper to a dedicated network portion operable to forward the message to the network node over a trusted network portion.

In another aspect, disclosed herein is an embodiment of a UE device operable to establish reliable data connectivity with a network node, wherein the UE device can communicate with the network node in at least one of a first connection and a second connection, the first and second connections being effectuable over two different networks. The claimed embodiment comprises one or more of the following: means for constructing a message (e.g., relating to an application service feature) that is to be executed at the network node, the means operating responsive to determining that the network node is not accessible via a first network using the first connection; and means for wrapping the message in a wrapper belonging to a second network and directing the wrapper to a dedicated network portion operable to forward the message to the network node over a trusted network portion.

In a still further aspect, disclosed herein is an embodiment of a system operable to facilitate reliable data connectivity between a UE device and a network node, wherein the network node is rendered inaccessible to the UE device via a packet-switched connection. The claimed embodiment comprises one or more of the following: means for receiving a message relating to a service feature activated from the UE device, the service feature to be executed on the network node, wherein the means for receiving operates to receive the message contained in a wrapper directed via a dedicated network portion; and means for processing the wrapper and packaging the message for transmission over a trusted network portion to the network node. As set forth below in additional detail, those skilled in the art should recognize that the various means recited herein may be implemented in software, firmware, hardware, or in any combination thereof, including suitable computer-executable instructions on media.

### BRIEF DESCRIPTION OF THE DRAWINGS

A more complete understanding of the embodiments of the present patent disclosure may be had by reference to the following Detailed Description when taken in conjunction with the accompanying drawings wherein:

FIG. 1 depicts an exemplary network environment including circuit-switched network infrastructure wherein an embodiment of the present patent disclosure may be practiced;

FIG. 2 depicts an exemplary message flow diagram for effectuating remote control of an enterprise server according to one or more embodiments of the present patent disclosure;

FIG. 3 depicts a flowchart of the present patent disclosure according to one embodiment;

FIG. 4 depicts an exemplary network environment including dedicated and trusted network infrastructure wherein reliable data connectivity may be implemented according to an embodiment;

FIG. 5 depicts another flowchart of the present patent disclosure according to one embodiment; and

FIG. 6 depicts a block diagram of an embodiment of a communications device operable for purposes of the present patent disclosure.

### DETAILED DESCRIPTION OF THE DRAWINGS

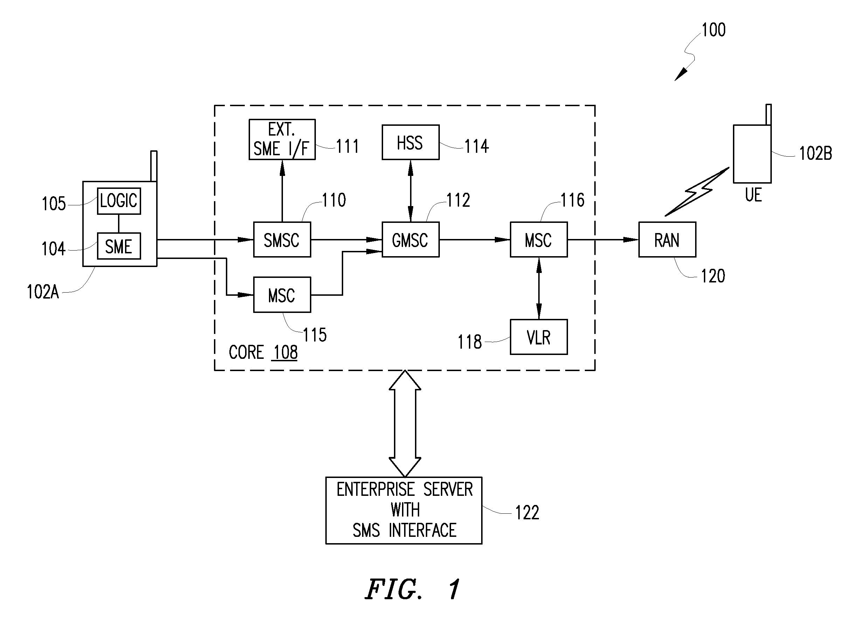

A system and method of the present patent disclosure will now be described with reference to various examples of how the embodiments can best be made and used. Like reference numerals are used throughout the description and several views of the drawings to indicate like or corresponding parts, wherein the various elements are not necessarily drawn to scale. Referring now to the drawings, and more particularly to FIG. 1, an exemplary network environment 100 is depicted wherein an embodiment of the present patent disclosure may be practiced for effectuating remote control of an enterprise server. As depicted, the network environment 100 includes a core cellular infrastructure network 108 for effectuating circuit-switched telecommunications using known technologies such as, e.g., Global System for Mobile Communications (GSM), with respect to a plurality of mobile user equipment (UE) devices. By way of example, reference numerals 102A and 102B refer to two UE devices (i.e., endpoints) that may be engaged in a circuit-switched call over the network 108 via known elements such as one or more mobile switching centers (MSC) 115, 116; one or more gateway MSCs (GMSC) 112; one or more home location registers (HLR) or home subscriber systems (HSS) 114, one or more visitor location registers (VLRs) 118; and one or more radio access network (RAN) infrastructure elements 120. As will be seen below, although certain embodiments of the present disclosure may be illustrated with known elements such as MSC/VLR, HLR/HSS, and the like, they could be generalized as network nodes having specific functionalities such as, e.g., an MSC/VLR entity may perform call control, service control and media switching. Accordingly, it should be apparent that regardless of the particular implementations set forth herein, the exemplary functionalities may also be effectuated by separate, more generalized platforms.

For purposes of further generalization, a UE device may be a cellular phone or mobile station, as well as any personal computer (e.g., desktops, laptops, palmtops, or handheld computing devices) equipped with a suitable wireless modem, or a dual-mode mobile UE device (e.g., cellular phones or data-enabled handheld devices capable of receiving and sending messages, IP datagrams containing applications such as but not limited to web browsing, et cetera). Accordingly, although not a requirement, a UE device for purposes of the present patent application may be capable of operating in both circuit-switched (CS) as well as packet-switched (PS) communications and may even be capable of effectuating an inter-technology handoff between both CS and PS domains.

One or more enterprise servers 122 may be operatively associated with the network 108 for hosting a number of services and/or service features that may be remotely controlled from a UE device, e.g., UE device 102A, while the device is still engaged in a CS connection with an endpoint. As will be set forth below in additional detail, in one exemplary embodiment, the enterprise server node(s) 122 may be provided with a suitable interface for receiving appropriate messages from a UE device that are transmitted in an out-of-band control channel with respect to an on-going CS connection. Furthermore, the enterprise server(s) 122 may be generalized to be a network node that has been rendered non-digitally addressable for some reason. By way of exemplary implementation, the embodiment of FIG. 1 is illustrative of an arrangement where UE device 102A is operable to control services/features at the server 122 using SMS messaging that is implemented to effectuate delivery of short text messages in any manner (e.g., a store-and-forward mechanism). In a further embodiment, the enterprise server(s) 122 may be controlled by means of Unstructured Supplementary Service Data (USSD) messaging effectuated over the control channel in a session-oriented mechanism. In a still further embodiment, User-to-User Signaling (UUS) may also be used whereby an intermediary node captures the UUS message flow and directs it to an enterprise server. Such a node may be within the network in which the enterprise server is disposed such as a modified Private Branch Exchange (PBX) (which could be a hosted PBX or otherwise) or another node.

With respect to the exemplary SMS implementation depicted in FIG. 1, a Short Message Entity (SME) 104 is provided with UE device 102A for constructing as well as receiving and sending short messages. A service application logic client 105 executing on UE device 102A is operable to generate a message that relates to a service feature request responsive to user input, wherein the message may be wrapped in an SMS message that is directed to the enterprise server 122. A Short Message Service Center (SMSC) 110 is operable to provide the SMS wrapper (e.g., via a store and forward mechanism) to an external SME 111 operable as an interface to one or more intermediary nodes, which may then communicate with the enterprise server 112 via other gateways, if necessary. It will be recognized by one skilled in the art that UE device 102A may be provided with a dedicated SMS mailbox (not explicitly shown in FIG. 1) with respect to effectuating remote control or data connectivity since a regular SMS mailbox (e.g., the mailbox used for sending and receiving text messages with respect to an SMS end user contact) may be full and thus causing messages from the enterprise server not to be delivered.

Further, although not explicitly illustrated in FIG. 1, there may be a separate data network connection operable to be effectuated via a PS network disposed between UE device 102A and node(s) 122. Accordingly, it will be appreciated that the network environment 100 may be visualized as having two different network connectivities between UE device 102A and node(s) 122, wherein one type of network connectivity is effectuated over the network portion 108 using the wrapper mechanism set forth herein.

For purposes of the present disclosure, the services being controlled on the enterprise server 112 are virtually unlimited. By way of illustration, a number of telephony service features may be provided that may relate to an on-going CS call such as, e.g., direct inward calling service, call transfer service, customized abbreviated dialing service, voice mail service, follow-me service, call forwarding service, music on hold service, automatic ring back service, automatic call distribution service, call waiting service, call pickup service, conference service, call accounting service, voice paging service, customized greeting service, shared message box service, and automated directory service.

Those skilled in the art will recognize that the teachings set forth hereinabove may be generalized within the context of messaging-based remote call control, wherein an intermediary messaging-based network node may be employed as illustrated in FIG. 1. In such arrangements, the intermediary network node may comprise either an SMSC or a USSD/UUS gateway. Accordingly, the destination address of the intermediary node may take the form of an E.164 number in one exemplary embodiment. Further, the destination address may be stored within an integrated memory circuit of the UE device or in a removable module such as a Universal Subscriber Identity Module (USIM), Removable User Identity Module (RUIM), Compact Flash, Secure Digital (SD) memory card, etc. In one implementation, the format of the destination address stored in the removable module may take the form as set forth below that is illustrative of the embodiments provided in applicable 3GPP specifications:

**Table I**

| | Intermediary Node Destination Address number | |
|---|---|---|
| Length of Destination Address contents | | |
| 1 ext | type of number | Numbering plan identification |
| Number digit 2 | | Number digit 1 |
| Number digit 4 | | Number digit 3 |
| . | | . |
| . | | . |
| . | | . |

**Table II**

| Identifier: | | | Structure: linear fixed | | | | |
|---|---|---|---|---|---|---|---|
| | | | | | | | |
| Record length: X bytes | | | | Update activity: low | | | |

| Access Conditions: | | | | | | | |
|---|---|---|---|---|---|---|---|
| READ PIN | | | | | | | |
| UPDATE ADM | | | | | | | |
| DEACTIVATE ADM | | | | | | | |
| ACTIVATE ADM | | | | | | | |

| Bytes | Description | | | | M/O | | Length |
|---|---|---|---|---|---|---|---|
| 1 to X | URI TLV data object | | | | M | | X bytes |

Moreover, the destination address of a serving messaging network node may be provisioned for a particular endpoint device using SMS, USSD, or via IP addressing, and the like, in addition to or in conjunction with known Over-The-Air (OTA) Device Management (DM) techniques. When the address is to be provisioned on the device, the appropriate code point in SMS may be required to be set, e.g., by setting the TP-Protocol Identifier (TP-PID) to a value that indicates wireless UE device data download.

Where USSD messaging is implemented for effectuating remote control, a specific "*#" sequence may need to be used in order to direct the data wrapper to the correct USSD server. Again, this sequence may be operator-specific, and may also be provisioned on the UE device. For instance, the sequence may be provisioned at the device manufacturer for a specific operator, for a group of operators, or for all operators. Accordingly, it should be appreciated that the "*#" sequence may be dependent on the carrier, and that a UE device could be configured with all "*#" sequences for all carriers or it may configured for a specific carrier providing the home service. The UE device may contain the carrier identity(ies) through appropriate means. For instance, the following table illustrates an exemplary embodiment:

**Table III**

| **Operator ID** | *# **Sequence** |
|---|---|
| [MCC:MNC] | *#a₁a₂a₃# |
| NAI | *#a₆a₄a₉# |
| SID | *#a₇a₂₂a₃₃# |
| SSID | *#a₁₁a₂₁a₃₁# |

where Operator ID is an identifier that uniquely identifies an operator based on the network technology. For instance, 3GPP/GSM networks may be identified with a Mobile Country Code (MCC) and Mobile Network Code (MNC) combination; SIP networks use Network Access Identifiers (NAI); CDMA networks use System Identification (SID) parameters; and WLAN networks use Service Set IDs (SSID).

Additionally or alternatively, the provisioning may be effectuated when the user inputs a new set of credentials (Private User Identity) such as International Mobile Subscriber Identity (IMSI) on USIM, or Mobile Identification Number (MIN) or Personal Identification Number (PIN), or Public User Identity (e.g., E.164 number), or some other SIP-based ID or a combination thereof. Presentation of the credentials then triggers the UE device to request operator-specific provisioning information which contains the "*#" sequence to use. As may be appreciated by one of ordinary skill in the art, a similar mechanism may also be used to retrieve the destination address of an SMSC node.

In addition, where SMSC addressing information is utilized, such information may be changeable by the user, and/or operator, and/or the enterprise. Various configuration fields may be provided in order to indicate if the user, operator, or the enterprise can effect the change. Likewise, the USSD sequence information may also be changed by the operator and/or the enterprise, with appropriate configuration field settings to indicate the changeability features. For purposes of the present disclosure, the term "address information" therefore includes both intermediary node (e.g., SMSC node) destination address information as well as USSD sequence information, which may be stored or otherwise provisioned as set forth in detail above.

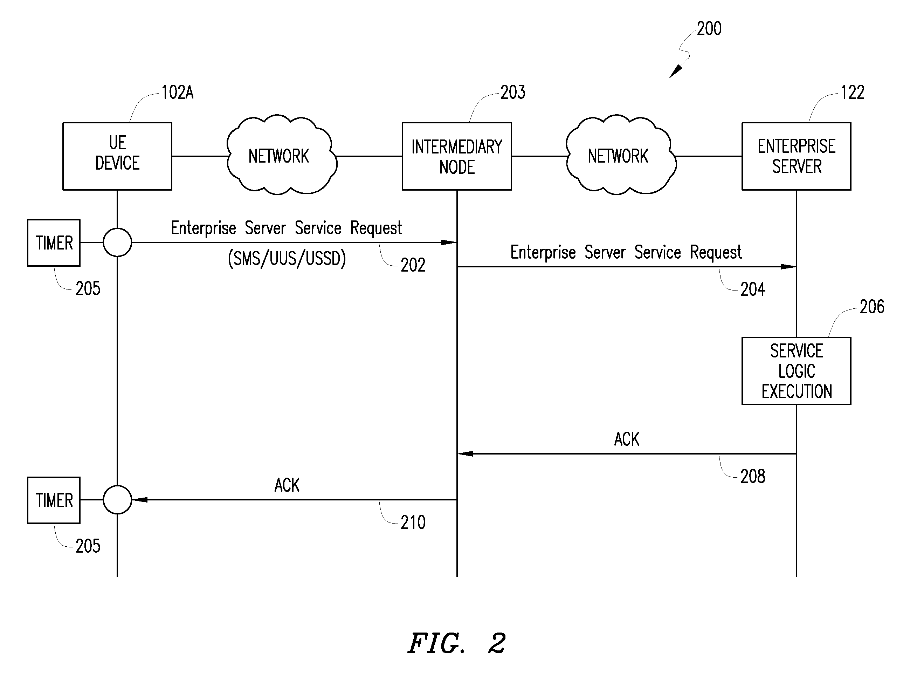

FIG. 2 depicts an exemplary message flow diagram 200 for effectuating remote control and/or data connectivity with respect to a network node (e.g., an enterprise server) according to one or more embodiments of the present patent disclosure. UE device 102A is engaged in a CS call when the user requests an enterprise/network service feature to be activated. A request message 202 is generated by an application running on UE device 102A in a format that is understood by the enterprise server 122, which is placed in a wrapper such as a message-based wrapper, USSD-based wrapper, or UUS-based wrapper. In one implementation, associated with the request message generation there may be an application layer timer mechanism (e.g., timer 205) that can be commenced, which may be terminated upon receiving a response back. If the timer expires the UE device may attempt to resend the message again. Below is an example list, but not limited to, of information elements that may be constructed by the UE device and used by the enterprise node:
a) Private User Identity (IMSI, MIN, PIN)
b) Public User Identity (A party - E.164 number of UE, E.164 number of Enterprise line, extension ID)
   i. The network node (enterprise server) needs to know who is requesting the service. It may be that it only understands Public User IDs that in this case the enterprise owns. One may also include the E.164 of the UE device as it needs to be ensured that it is only coming from a certain user in combination with Instance ID. Note this may not be required because the communication is encrypted with keys that only both sides understand and uniquely identify the user.
c) Instance identifier (IMEI, ESN, MAC address, PIN)
   i. Here one may include this ID because we don't want to activate, e.g., a service that the UE device does not support. Such an ID could be queried in a database to determine if the service can be invoked, activated, deactivate or interrogated.
d) Location of the subscriber (CGI or a part thereof, GPS, waypoint etc.)
   i. The control of the service may be limited where the subscriber is for cost issues.
e) Code of the service one wants to communicate with
f) Data for the service

Although there are limitations to the length of a single message (e.g., SMS message), it is possible to segment a larger request message into smaller wrappers. The wrapper or wrapper segments are transmitted to one or more intermediary nodes 203 that process the wrapper message and forward the processed message 204 to the enterprise server 122. In one embodiment, the intermediary node 203 may comprise an SMSC that is provided by the carrier network. Alternatively, the SMSC node may be hosted by a third-party service. In another embodiment, the intermediary node 203 may comprise a USSD gateway. Those skilled in the art will recognize that while in a CS call in GSM, it is possible to send USSD messages from the UE device in a session-oriented mechanism, which offers shorter turnaround response times for interactive applications. Further, USSD messages may be routed to the UE device's home provisioning server (e.g., HLR or HSS) and then via a suitable gateway node to the enterprise server 122. In a still further embodiment, the intermediary node may also be a function based at the enterprise that receives UUS-based call control signaling and sends it out. The primary purpose of the function is to look for UUS messages which it will then extract and forward to the enterprise server. It will also inject any responses back to the originating UE.

Regardless of the exact implementation, accordingly, it should be appreciated that there may be other network elements that may be involved in effectuating the SMS/USS/USSD paths with respect to the message flow embodiment 200 of FIG. 2, which have been omitted for the sake of simplicity. Also, there may be implementations where fewer network elements may be involved, e.g., where a USSD gateway need not communicate via a home provisioning server.

Message routing from the intermediary node 203 to the enterprise server 122 may be achieved by means of a telephone number (e.g., E.164 numbering), IP addressing, and the like. Upon receiving the wrapped service feature message, service logic associated with the enterprise server 122 is executed to act on the message (illustrated as block 206), which performs the requested service feature. Thereafter, a confirmation or acknowledgement may be transmitted back to UE device 102A via response paths 208, 210. And, as alluded to previously, if a timer was started at the UE device, it may be terminated upon receipt of the confirmation message. One skilled in the art will recognize that the timer may either be hard-coded at manufacture or provisioned by the enterprise or the operator using mechanisms set forth in the present application. Further, one or more segments of the messaging flow described herein may be encrypted for purposes of security.

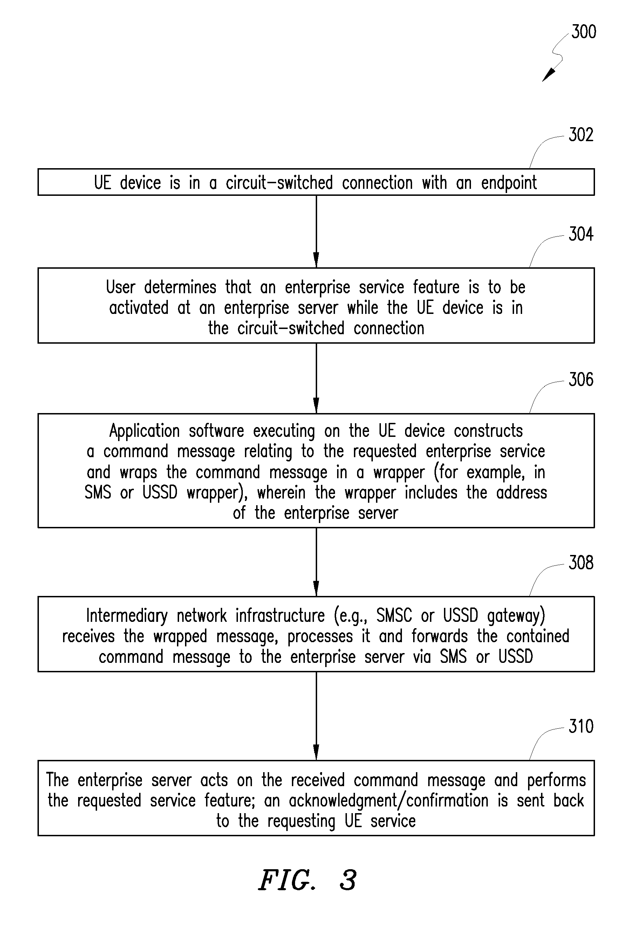

FIG. 3 depicts a flowchart 300 of the present patent disclosure according to one embodiment wherein various processes take place at a UE device and/or associated application server for effectuating remote control thereof. At block 302, UE device, e.g., UE device 102A shown in FIG. 1, is in a CS connection with an endpoint, e.g., UE device 102B in FIG. 1. Upon determining by the user that an enterprise service feature is to be activated at the enterprise server while the UE device is engaged in the CS connection, i.e., the server is not accessible via packet-switched connection (block 304), application software executing on the UE device constructs a command message relating to the requested enterprise service responsive to user input and wraps the message in a wrapper belonging to another type of network such as the SMS or USSD wrapper described above (block 306). In one implementation, the contents of the message may be encrypted to provide higher level of security. Intermediary network infrastructure (e.g., SMSC nodes or USSD gateway(s)) processes the wrapped message upon receipt and forwards it to the enterprise server (block 308). As set forth above, the enterprise server performs the requested service feature and generates an acknowledgement or confirmation in response for transmission back to the UE device (block 310). The response may be transmitted via an out-of-band control channel with respect to the CS call or via a packet-switched data connection between the UE device and the enterprise server if the direct data connection is available (because the CS call has been terminated, for example). Accordingly, one skilled in the art will recognize that the protocol used to transmit the request message from the UE device to the enterprise server does not necessarily have to the same protocol to send back the response.

Although the foregoing embodiments advantageously provide data connectivity with a network node, e.g., for it its remote control, there are certain shortcomings that may arise in some exemplary implementations, however. For instance, in an SMS-based arrangement, the message delivery may be based on a store-and-forward mechanism, i.e., messages received at the SMSC node cannot be relied upon to reach the destination node within a strict time limit. In other words, a high Quality of Service (QoS) may not be feasible in such systems. On the other hand, employing the USSD-based embodiments described above require expensive outlays with respect to the requisite USSD-capable infrastructure, e.g., USSD gateway(s), suitable USSD interfaces operable with the network nodes, etc. These issues are particularly exacerbated where a carrier network is utilized for maintaining the various intermediary nodes described in detail above for appropriately routing the wrapper-based service requests.

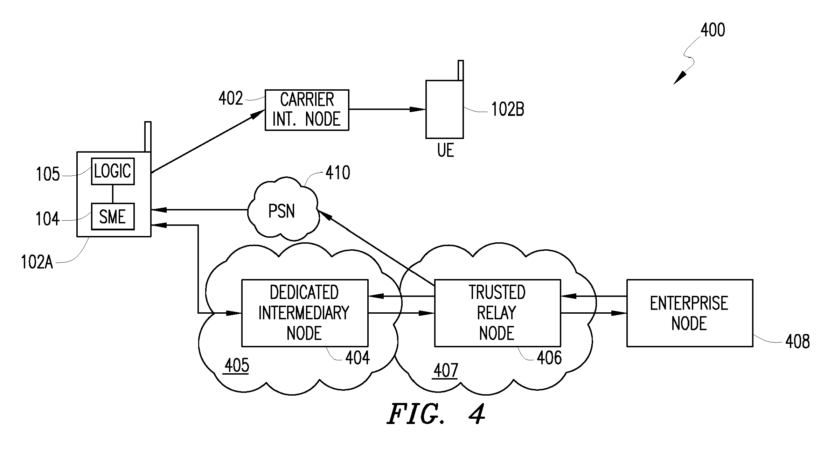

FIG. 4 depicts an exemplary network environment 400 including dedicated and trusted network infrastructure wherein reliable data connectivity with a network node 408 may be implemented according to an embodiment. As illustrated, a carrier-based intermediary node 402 (e.g. SMSC) may be conventionally utilized for maintaining a text message path with an endpoint such as UE 102B. Regardless of whether the carrier-based networking is available, a separate, dedicated network portion 405 having a dedicated intermediary node 404 may be provisioned for receiving and processing wrapper-based service requests from UE device 102 as described in the foregoing sections. For instance, a third-party operator may provision a dedicated SMSC or USSD/UUS gateway for handling the wrapper requests with assured QoS based on appropriate service-level agreements. Accordingly, the dedicated intermediary node 404 may circumvent a store-and-forward mechanism with respect to its request processing procedures. Furthermore, since the dedicated intermediary nodes are not provisioned as part of the carrier services network, the message-based data connectivity service may not have any implication with respect to carrier service fees.

Upon receipt of the wrapper-based request, the dedicated intermediary node 404 immediately processes the wrapper message and transmits the contained service request to another reliable third-party node, which may be operable as a trusted relay node 406 disposed in a trusted network portion 407. In one implementation, the dedicated intermediary node 404 and trusted relay node 406 may be disposed in separate network portions. In another implementation, both nodes 404 and 406 may be co-located. A server-to-server protocol may be utilized for transporting the packets between the nodes irrespective of their location. The trusted node 406 processes the received service request for routing based on reliable methods for effectuating data transfer. Again depending on implementation, either proprietary and/or standard protocols may be utilized. For example, a General Message Envelope (GME) protocol may be effectuated over a trusted network pathway disposed between the trusted node 4046 and the network node 408.

As described previously, the network node 408 acts on the received message and performs the requested service(s). Thereafter, a confirmation response (e.g., ACK 208 in FIG. 2) may be transmitted back to UE device 102A, essentially reversing the in-bound path. It should be appreciated that the network node 408 does not have to know how to address the third-party intermediary node 404, as these details may be advantageously hidden by the intermediate components of the trusted network portion. In addition, the trusted node 406 may be provided with the functionality to determine whether a reverse path via the dedicated intermediary node 404 be used transmitting the confirmation response message back to UE device 102A. As alluded to previously, for example, a carrier-based data path via a PS network (PSN) 410 may become available if UE device 102A has released its CS connection.

During the foregoing operation, the user need not be aware that the signaling is being sent over an out-of-band control channel. In addition, the user may not even be aware of the third-party node configuration initially, as this information may be pushed to the device from the network (e.g., from the trusted network node 406) prior to engaging the out-of-band data connectivity process.

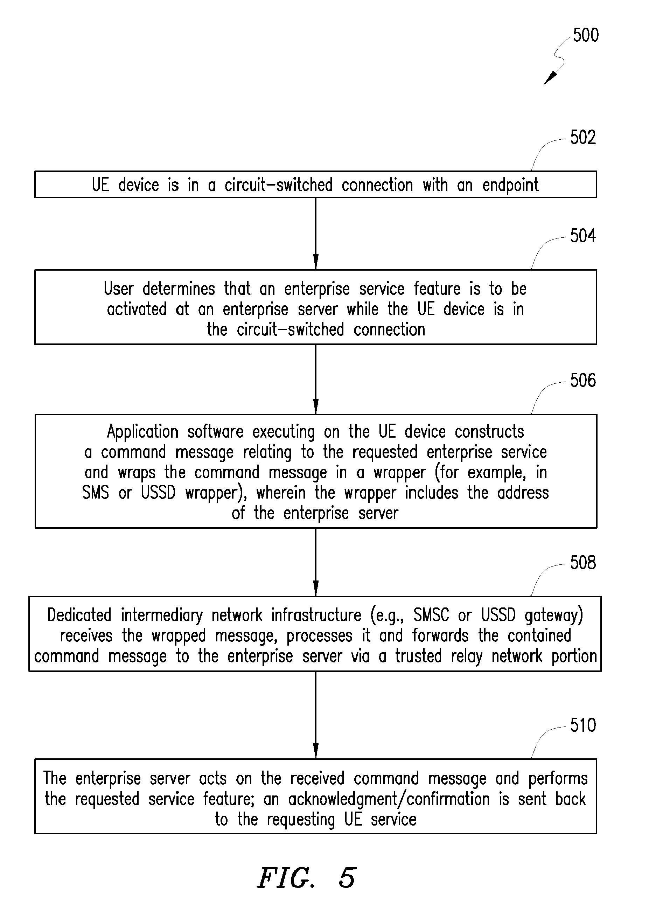

FIG. 5 depicts a process flow 500 of the present patent disclosure according to one embodiment for establishing reliable data connectivity with a network node that is rendered digitally non-addressable for some reason. Similar to the embodiment depicted in FIG. 3, various operations take place at a UE device and/or associated network node for effectuating a reliable data connection therebetween. At block 502, 504, and 506, a UE device, e.g., UE device 102A shown in FIG. 1, operates in a manner that is substantially similar to the device's behavior shown in FIG. 3 with respect to generating a message-based wrapper. As set forth in block 508, a dedicated intermediary node rather than a carrier-based intermediary node receives the wrapped message, whereupon it is processed and forwarded to the network node via a trusted network portion. As set forth above, the network node performs the requested service feature and generates an acknowledgement or confirmation in response for transmission back to the UE device. The response may be transmitted via an out-of-band control channel with respect to the CS call (via the dedicated network portion) or via a packet-switched data connection between the UE device and the trusted network portion. Those skilled in the art will recognize that the various implementational details provided with respect to the message flow 200 and process flow 300 of FIGS. 2 and 3, respectively, may also be applied to the process flow 500, *mutatis mutandis,* where additional reliability of data transfer between the UE device and associated network node is sought.

Based on the foregoing, it can be appreciated that the exemplary embodiments provide a scheme for controlling a network node in operation with a UE device, wherein the UE device can communicate with network node in a first connection and a second connection. As alluded to before, the first and second connections are effectuable over two different networks or technologies (e.g., a CS connection and a non-CS connection) The exemplary embodiment may involve one or more of the following: determining that the network node is not accessible via a first network using the first connection; constructing a message relating to a service feature that is to be executed at the network node; and wrapping the message in a wrapper belonging to a second network and directing the wrapper to a dedicated network portion operable to forward the message to the network node over a trusted network portion. Accordingly, appropriate logic blocks or modules are provided with the UE device to effectuate the foregoing operations.

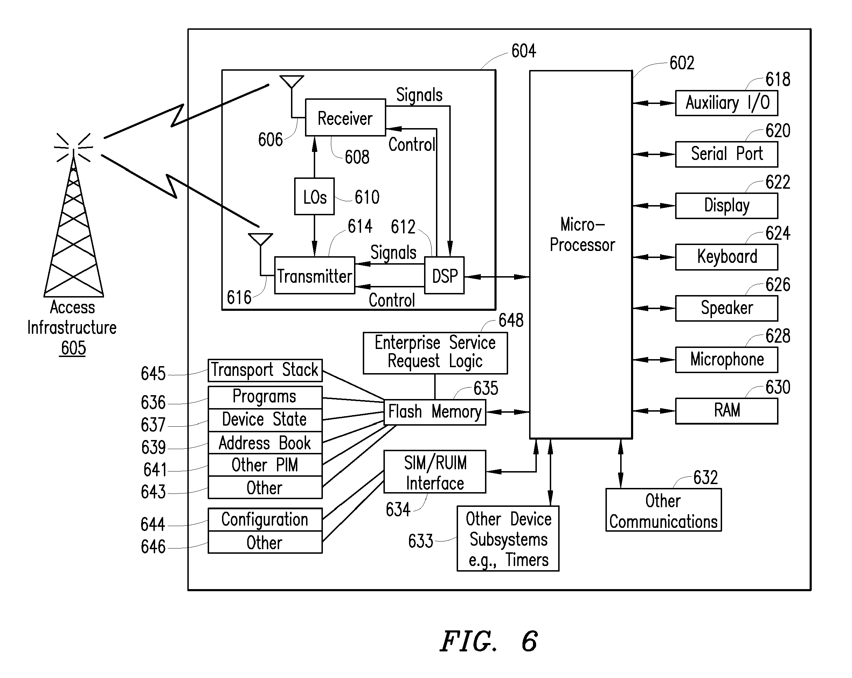

FIG. 6 depicts a block diagram of an embodiment of a communications device operable as a UE device, e.g., UE 102A, for purposes of the present patent disclosure. It will be recognized by those skilled in the art upon reference hereto that although an embodiment of UE 102A may comprise an arrangement similar to one shown in FIG. 6, there can be a number of variations and modifications, in hardware, software or firmware, with respect to the various modules depicted. Further, a UE device for purposes of the present disclosure may comprise a mobile equipment (ME) device without a removable storage module and/or a mobile device coupled with such a storage module. Accordingly, the arrangement of FIG. 6 should be taken as illustrative rather than limiting with respect to the embodiments of the present patent disclosure. A microprocessor 602 providing for the overall control of an embodiment of UE 102A is operably coupled to a communication subsystem 604 that may preferably be capable of multi-mode communications (e.g., CS domain and PS domain). The communication subsystem 604 generally includes one or more receivers 608 and one or more transmitters 614 as well as associated components such as one or more local oscillator (LO) modules 610 and a processing module such as a digital signal processor (DSP) 612. As will be apparent to those skilled in the field of communications, the particular design of the communication module 604 may be dependent upon the communications networks with which the mobile device is intended to operate (e.g., a CDMA network, a GSM network, WLAN, et cetera). Regardless of the particular design, however, signals received by antenna 606 through appropriate access infrastructure 605 (e.g., cellular base station towers, WLAN hot spots, etc.) are provided to receiver 608, which may perform such common receiver functions as signal amplification, frequency down conversion, filtering, channel selection, analog-to-digital (A/D) conversion, and the like. Similarly, signals to be transmitted are processed, including modulation and encoding, for example, by DSP 612, and provided to transmitter 614 for digital-to-analog (D/A) conversion, frequency up conversion, filtering, amplification and transmission over the air-radio interface via antenna 616.

Microprocessor 602 may also interface with further device subsystems such as auxiliary input/output (I/O) 618, serial port 620, display 622, keyboard/keypad 624, speaker 626, microphone 628, random access memory (RAM) 630, a short-range communications subsystem 632, and any other device subsystems, e.g., timer mechanisms, generally labeled as reference numeral 633. To control access, a USIM/RUIM interface 634 may also be provided in communication with the microprocessor 602. In one implementation, USIM/RUIM interface 634 is operable with a USIM/RUIM card having a number of key configurations 644 and other information 646 such as identification and subscriber-related data, as well as SMSC/intermediary node destination address information and USSD sequence information described in the foregoing sections.

Operating system software and applicable service logic software may be embodied in a persistent storage module (i.e., non-volatile storage) such as Flash memory 635. In one implementation, Flash memory 635 may be segregated into different areas, e.g., storage area for computer programs 636 (e.g., service processing logic), as well as data storage regions such as device state 637, address book 639, other personal information manager (PIM) data 641, and other data storage areas generally labeled as reference numeral 643. A transport stack 645 may be provided to effectuate one or more appropriate radio-packet transport protocols. In addition, suitable network service request logic and SMS/UUS/USSD messaging logic 648, including memory storage for storing pertinent address information, is provided for effectuating reliable data connectivity with a network node as set forth hereinabove.

It is believed that the operation and construction of the embodiments of the present patent application will be apparent from the Detailed Description set forth above. While the exemplary embodiments shown and described may have been characterized as being preferred, it should be readily understood that various changes and modifications could be made therein without departing from the scope of the present disclosure as set forth in the following claims.

## Claims

1. A method for establishing reliable data connectivity with a network node (408) in operation with a user equipment (UE) device (102A), wherein said UE device (102A) can communicate with said network node (408) in at least one of a first connection and a second connection, said first and second connections being effectuable over two different networks, comprising:
determining (502, 504) that said network node (408) is not accessible via a first network using said first connection;
constructing (506) a message relating to a service feature that is to be executed at said network node (408); and
wrapping (506) said message in a wrapper belonging to a second network and directing (508) said wrapper to a dedicated network portion (405) operable to forward said message to said network node (408) over a trusted network portion (407).

2. The method as recited in claim 1, wherein a timer mechanism (205) is commenced upon directing said wrapper to said network node (408).

3. The method as recited in claim 1 or claim 2, wherein said wrapper comprises one of a Short Message Service (SMS)-based message, an Unstructured Supplementary Service Data (USSD)-based message, and a User-to-User Signaling (UUS)-based message.

4. The method as recited in claim 1, wherein said service feature comprises a telephony service feature.

5. The method as recited in claim 4, wherein said telephony service feature is selected from one of direct inward calling service, call transfer service, customized abbreviated dialing service, voice mail service, follow-me service, call forwarding service, music on hold service, automatic ring back service, automatic call distribution service, call waiting service, call pickup service, conference service, call accounting service, voice paging service, customized greeting service, shared message box service, and automated directory service.

6. The method as recited in claim 1, further comprising receiving (510) a confirmation response from said network node (408) upon servicing said message.

7. The method as recited in claim 6, wherein a timer mechanism (205) is terminated upon receipt of said confirmation response.

8. The method as recited in claim 6, wherein said confirmation response is received via a packet-switched data connection (410) disposed between said UE device (102A) and said network node (408).

9. The method as recited in claim 1, wherein said wrapper is directed via a dedicated intermediary node (203, 404) having a destination address and disposed in said dedicated network portion (405), said dedicated intermediary node (203, 404) comprising one of a Short Message Service Center (SMSC), a USSD gateway and a UUS function.

10. The method as recited in claim 9, wherein said destination address is stored in at least one of a memory circuit integrated within said UE device and a removable module operable with said UE device.

11. The method as recited in claim 10, wherein said removable module comprises one of a Universal Subscriber Identity Module (USIM), a Removable User Identity Module (RUIM), a Compact Flash module, and Secure Digital (SD) memory card.

12. The method as recited in claim 10, wherein said destination address is read by said UE device (102A) from said removable module via an interface (634).

13. A user equipment (UE) device (102A) operable to establish reliable data connectivity with a network node (408), wherein said UE device (102A) can communicate with said network node (408) in at least one of a first connection and a second connection, said first and second connections being effectuable over two different networks, comprising:
means (602, 646, 648) for constructing a message relating to a service feature that is to be executed at said network node (408), said means operating responsive to determining that said network node (408) is not accessible via a first network using said first connection; and
means (602, 646, 648) for wrapping said message in a wrapper belonging to a second network and directing said wrapper to a dedicated network portion (405) operable to forward said message to said network node (408) over a trusted network portion (407).

14. The UE device (102A) as recited in claim 13, further including a timer mechanism (205, 633) that is operable to commence upon directing said wrapper towards said network node (408).

15. The UE device (102A) as recited in claim 13 or claim 14, wherein said wrapper comprises one of a Short Message Service (SMS)-based message, an Unstructured Supplementary Service Data (USSD)-based message, and a User-to-User Signaling (UUS)-based message.

16. The UE device (102A) as recited in claim 13, further comprising a timer mechanism (205, 633) that is terminated upon receipt of a confirmation response generated by said network node (408).

17. A system (406) operable to facilitate reliable data connectivity between a user equipment (UE) device (102A) and a network node (408), wherein said network node (408) is rendered inaccessible to said UE device (102A) via a packet-switched connection, comprising:
means for receiving a message relating to a service feature activated from said UE device (102A), said service feature to be executed on said network node (408), said means for receiving operating to receive said message contained in a wrapper directed via a dedicated network portion (405); and
means for processing said wrapper and packaging said message for transmission over a trusted network portion (407) to said network node (408).

18. The system (406) as recited in claim 17, wherein said wrapper comprises one of a Short Message Service (SMS)-based message, an Unstructured Supplementary Service Data (USSD)-based message, and a User-to-User Signaling (UUS)-based message.

19. The system (406) as recited in claim 17, further comprising means for processing a confirmation response received from said network node (408), said confirmation response being operable to be transmitted via a packet-switched data connection (410) to said UE device (102A).

20. The system (406) as recited in claim 17, further comprising means for processing a confirmation response received from said network node (408), said confirmation response being operable to be transmitted via said dedicated network portion (405).
